# EUROPEAN PATENT APPLICATION

(11) **EP 3 681 108 A1**
(43) Date of publication of application: **15.07.2020**
(21) Application number: 19175991.9
(22) Date of filing: 22.05.2019
(51) Int. Cl.: H04L 12/28

(54) **HOME DEVICE CONTROL SYSTEM AND METHOD THEREOF**

(30) Priority: 11.01.2019 TW 108101148
(71) Applicant: Proeasy Network Solutions Co., Ltd., Hsinchu 307 (TW)
(72) Inventor: LU, Hsing-Hung, 307 Hsinchu (TW)
(74) Representative: Emde, Eric

(57) **Abstract**

A home device control system and method thereof are provided. The system includes a monitoring device, a mobile communication device, and a home control gateway. The mobile communication device provides a first operation interface for receiving a connection request, logs on to the monitoring device via a local area network according to the connection request, and generates an identification code. The home control gateway includes a microprocessor module, a storage module pre-storing identification codes, a gateway management module and a second communication circuit. The second communication circuit receives and transmits the identification code and a device control command to the gateway management module, and when the gateway management module determines that the identification code is the same with one of the pre-stored identification codes, activates the home control function corresponding to at least one home device corresponding to the device control command.

## Description

### BACKGROUND

### Technical Field

The invention relates to a home control technique, and particularly relates to a home device control system and a method thereof.

### Description of Related Art

In the past half century, computer technology has a booming development, and along with advances of such technology, many automated devices have been applied to daily life of ordinary people, such as washing machines, dishwashers, and sweeping robots. Moreover, due to changes in family's demographic structures and changes in social work patterns, the manpower devoted to family services has gradually been replaced by machines. Integration programs that may make overall management and control of all kinds of appliances and equipment in home, such as lightings, a TV set, a safety system, an air conditioner, audio-visual equipment, etc., are continuously developed, and terms such as Smart Home, Digital Home, Electronic Home, Home Automation, etc., have also appeared one after another.

Home automation control system is to combine automated equipment and computer software technology and program applications with household equipment, such as a TV set, an electric cooker, an air conditioner, a refrigerator, a gas switch, an alarm system, a security system, a monitoring system, etc., to improve family comfort and home safety. The home automation control system generally includes a control system and a control host, and a user sends a control command through the control system, so as to drive various devices through the control host. Besides, by using various wireless communication transmission technologies, for example, GPRS, WiFi, WiMAX, 3G or 4G, etc., even if the user is on a business trip, vacation, or travel, the user may still connect to the Internet through an Internet connection function of a mobile phone, a notebook computer, etc., to operate various devices in the home in a remote control manner, or activate a security system and monitor a situation at home, which provides larger flexibility and convenience.

Current monitoring systems and other equipment may only be used for monitoring, and remote control of the home devices cannot be achieved. Therefore, how to make the user to be able to easily and safely control the home devices in remote control based on the existing monitoring system is the main purpose and goal of the invention.

### SUMMARY

The invention is directed to a home device control system and a method thereof, by which a user is able to easily and safely control home devices in remote control based on an existing monitoring system.

The invention provides a home device control system including a monitoring device, at least one mobile communication device, and a home control gateway. The monitoring device includes a control server and a first communication circuit. The at least one mobile communication device provides a first operation interface for receiving a connection request, logs on to the control server via a local area network according to the connection request, and generates an identification code. The home control gateway includes a microprocessor module, a storage module, a gateway management module and a second communication circuit. The storage module is coupled to the microprocessor module, and pre-stores one or a plurality of identification codes. The gateway management module is coupled to the microprocessor module. The second communication circuit is coupled to the microprocessor module and the gateway management module, and receives the identification code and a device control command through the first communication circuit and transmits the identification code and the device control command to the gateway management module, where the device control command instructs to activate or deactivate a home control function corresponding to at least one home device, and when the gateway management module determines that the identification code is the same with one of the one or a plurality of identification codes pre-stored in the storage module, the gateway management module activates the home control function corresponding to the at least one home device corresponding to the device control command.

In an embodiment of the invention, in the home device control system, the monitoring device is a digital video recorder.

In an embodiment of the invention, in the home device control system, the identification code and the device control command are complied with a transmission format of a PTZ communication protocol, and the first communication circuit transmits the identification code and the device control command to the gateway management module according to the PTZ communication protocol.

In an embodiment of the invention, in the home device control system, the identification code is correspondingly generated according to a user name and a password used for logging on to the control server via the local area network.

In an embodiment of the invention, in the home device control system, the identification codes are pre-stored to the storage module in a manual input manner.

In an embodiment of the invention, in the home device control system, the number of the identification codes is smaller than a predetermined value.

In an embodiment of the invention, in the home device control system, the first operation interface is accessed by a browser or accessed by a mobile device application.

In an embodiment of the invention, in the home device control system, the local area network is a wired local area network or a wireless local area network.

The invention provides a home device control method including: pre-storing one or a plurality of identification codes; receiving a connection request, logging on to a control server of a monitoring device via a local area network according to the connection request, and generating an identification code; receiving and transmitting the identification code and a device control command, where the device control command instructs to activate or deactivate a home control function corresponding to at least one home device; and activating the home control function corresponding to the at least one home device corresponding to the device control command when determining that the identification code is the same with one of the pre-stored one or a plurality of pre-stored identification codes.

In an embodiment of the invention, in the home device control method, the monitoring device is a digital video recorder.

In an embodiment of the invention, in the home device control method, the step of receiving and transmitting the identification code and the device control command, where the device control command instructs to activate or deactivate the home control function corresponding to the at least one home device includes: transmitting the identification code and the device control command complied with a transmission format of a PTZ communication protocol according to the PTZ communication protocol.

In an embodiment of the invention, in the home device control method, the step of receiving the connection request, logging on to the control server of the monitoring device via the local area network according to the connection request, and generating the identification code comprises: correspondingly generating the identification code according to a user name and a password used for logging on to the control server via the local area network.

In an embodiment of the invention, in the home device control method, the step of pre-storing the identification codes includes pre-storing the identification codes in a manual input manner.

In an embodiment of the invention, in the home device control method, the number of the identification codes is smaller than a predetermined value.

In an embodiment of the invention, in the home device control method, the step of receiving the connection request, logging on to the control server of the monitoring device via the local area network according to the connection request, and generating the identification code comprises: using a browser to access or a mobile device application to receive the connection request, logging on to the control server of the monitoring device via the local area network according to the connection request and generating the identification code.

In an embodiment of the invention, in the home device control method, the local area network is a wired local area network or a wireless local area network.

Based on the above description, the home device control system and the home device control method of the invention are combined with the existing monitoring system, and the monitoring system transmits the identification code and the device control command complied with the transmission format of the PTZ communication protocol to the home control gateway by using the PTZ communication protocol, so as to control the home control function corresponding to the home device in remote control according to the device control command, such that the user may easily and safely control the home devices in remote control.

To make the aforementioned more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of remote home control according to an exemplary embodiment of the invention.
FIG. 2 is a diagram of a home control system according to an exemplary embodiment of the invention.
FIG. 3 is a block schematic diagram of a home control gateway according to an exemplary embodiment of the invention.
FIG. 4 is a schematic diagram of a first operation interface of a mobile communication device according to an exemplary embodiment of the invention.
FIG. 5 is a flowchart illustrating a home device control method according to an exemplary embodiment of the invention.

### DESCRIPTION OF THE EMBODIMENTS

Along with advance of network technology, if the existing monitoring system may be applied to simplify the steps of user identification and provide a secure remote control method, it will be more convenient and easy to operate a home automation control system. The invention is developed based on the above concept.

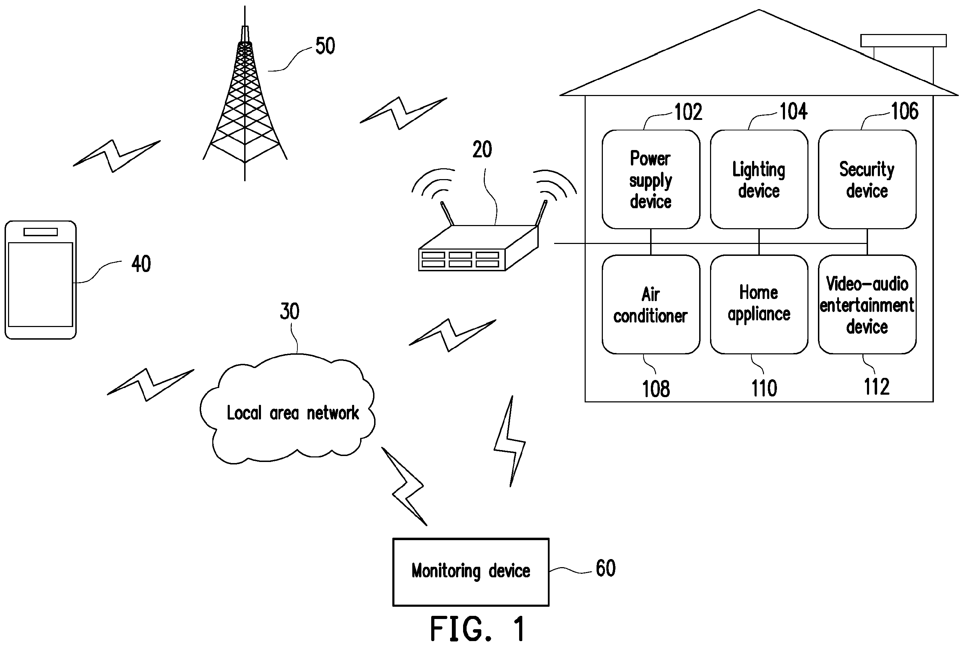

FIG. 1 is a schematic diagram of remote home control according to an exemplary embodiment of the invention.

Referring to FIG. 1, a remote home control environment generally includes home devices, a home control gateway 20, a Local Area Network (LAN) 30, a mobile communication device 40, a mobile phone network 50 and a monitoring device 60.

The home devices include a power supply device 102, a lighting device 104, a security device 106, an air conditioner 108, a home appliance 110 and a video-audio entertainment device 112. However, it should be noted that the home devices are not limited thereto, and the above home devices are not intended to be limiting of the invention. For example, the power supply device 102, the lighting device 104, the security device 106, the air conditioner 108, the home appliance 110 and the video-audio entertainment device 112 respectively have a control chip or a control circuit to receive a device control command coming from the home control gateway 20, and execute a function of the corresponding home device according to the device control command.

The home control gateway 20 has one or a plurality of communication channels, and a user may communicate with the home control gateway 20 through the communication channels to implement remote control of the home devices.

The LAN 30 is a wireless LAN (Wi-Fi) established according to a LAN protocol transmission standard, and the home control gateway 20 may communicate with electronic devices with network connection capability through the LAN 30. For example, the LAN protocol transmission standard is a 802.11 series transmission standard based on Internet communication protocol developed by Institute of Electrical and Electronics Engineers (IEEE). However, the invention is not limited thereto, for example, the LAN 30 may also be a wired LAN.

The mobile communication device 40 is a mobile communication device of the user, which includes a Subscriber Identity Module (SIM) card. The mobile communication device 40 is, for example, a cell phone, a Personal Digital Assistant (PDA), a smart phone, etc., and the type of the mobile communication device 40 is not limited by the invention.

The mobile phone network 50 is a telecommunication service provided by a telecommunication service provider, for example, a Global System for Mobile Communications (GSM) system, a Code Division Multiple Access (CDMA) system, or a Personal Handy-phone System (PHS), etc.

The monitoring device 60 has one or a plurality of communication channels, and the user may transmit an identification code and the device control command to the home control gateway 20 via the communication channels according to a PTZ communication protocol, so as to communicate with the home control gateway 20 to perform remote control on the home devices.

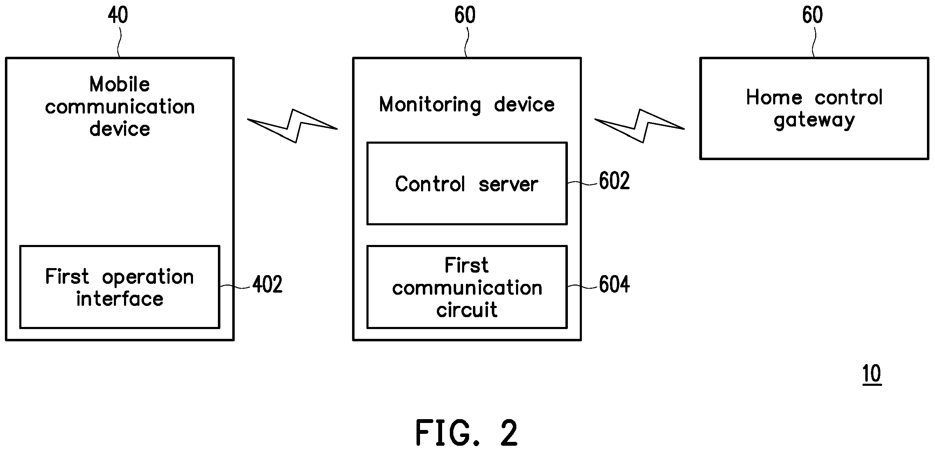

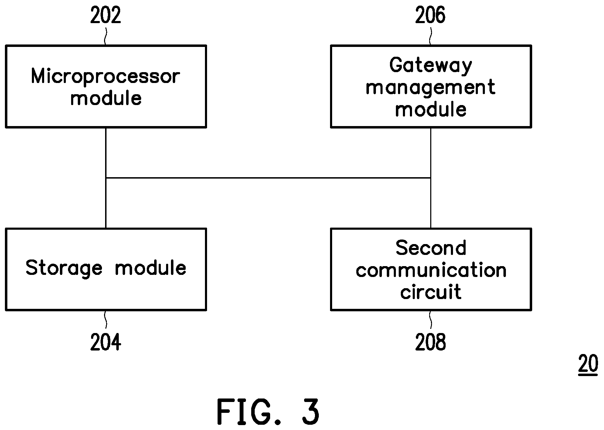

FIG. 2 is a block diagram of a home control system according to an exemplary embodiment of the invention, and FIG. 3 is a schematic diagram of a home control gateway according to an exemplary embodiment of the invention.

Referring to FIG. 2 and FIG. 3, in an exemplary embodiment, the home control system 10 includes the mobile communication deice 40, the monitoring device 60 and the home control gateway 20.

The monitoring device 60 includes a control server 602 and a first communication circuit 604. In an exemplary embodiment, the monitoring device 60 may be a digital video recorder (DVR). The mobile communication device 40 used by the user may transmit the identification code and the device control command to the home control gateway 20 through the first communication circuit 604 according to the PTZ communication protocol, so as to communicate with the home control gateway 20.

The mobile communication device 40 provides a first operation interface 402 used for receiving a connection request. For example, the first operation interface 402 adopts a webpage control interface (i.e. accessed through a browser) or a mobile device application (APP) interface to implement the remote control.

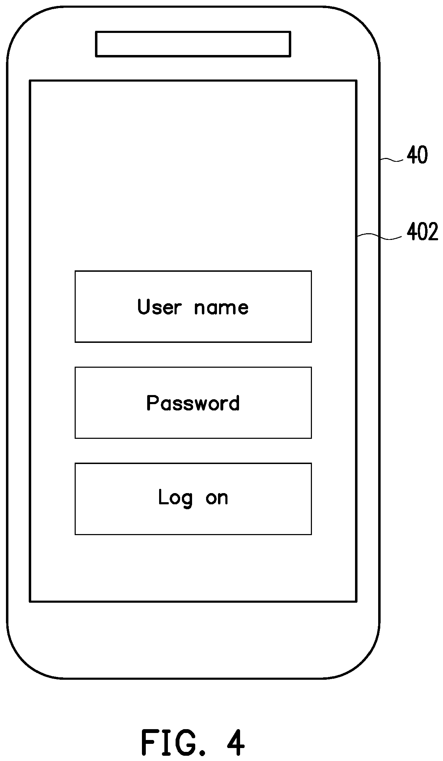

FIG. 4 is a schematic diagram of the first operation interface of the mobile communication device according to an exemplary embodiment of the invention.

Referring to FIG. 2 to FIG. 4, the user inputs a user name and a password through the first operation interface 402 to receive the connection request, and transmits the connection request through the LAN 30 and logs on the control server 602, and after receiving the connection request and logging on the control server 602, the control server 602 generates a unique identification code according to the user name and the password, where the unique identification code is correspondingly generated according to the user name and the password, for example, the identification code may be the user name. When it is confirmed that the connection request of the mobile communication device 40 is permitted, a control right to control the home control system 10 may be obtained. Moreover, the user may further input the device control command through the first operation interface 402 to activate or deactivate a home control function corresponding to the home device in the home control system 10.

The home control gateway 20 includes a microprocessor module 202, a storage module 204, a gateway management module 206 and a second communication circuit 208.

The microprocessor module 202 is hardware with a computation power (for example, a chipset, a processor, etc.), which is used for controlling a whole operation of the home control gateway 20. In the exemplary embodiment, the microprocessor module 202 is, for example, a Central Processing Unit (CPU), or other programmable microprocessor, a Digital Signal Processor (DSP), a programmable controller, an Application Specific Integrated Circuits (ASIC), a Programmable Logic Device (PLD) or other similar device.

The storage module 204 is coupled to the microprocessor module 202. The storage module 204 may be an embedded storage unit or an external storage unit. The embedded storage unit may be a Random Access Memory (RAM), a Read-Only Memory (ROM), a flash memory, a Magnetic disk storage device, etc. The external storage unit may be a Compact Flash (CF) memory card, a Secure Digital (SD) memory card, a micro SD memory card, a Memory Stick (MS), etc. To be specific, in the exemplary embodiment, the storage module 204 is used for storing one or a plurality of identification codes, and may also store one or a plurality of programs or applications, operating systems to control the operation of the home control gateway 20.

Moreover, before the user performs the remote home control through the home control gateway 20, the user has to first store the identification code to the storage module 204 of the home control gateway 20. In the exemplary embodiment, the user may store one or a plurality of identification codes.

In an exemplary embodiment, the home control gateway 20 provides a second operation interface, and the user may store the identification code to the storage module 204 through the second operation interface in a manual input manner. For example, in an example of storing the identification code to the storage module 204 of the home control gateway 20 in the manual input manner, the second operation interface of the home control gateway 20 may include an identification code input image, and the user may manually input the identification code through an electronic device having a physical keyboard or a virtual keyboard. For another example, the user may also input the pre-stored identification code to a message through the mobile communication device and transmit the message to the home control gateway 20 for storage. For another example, the user may also input the identification code to the home control gateway 20 for storage by using a telephone keyboard through a voice operation service provided by the home control gateway 20. In the exemplary embodiment, the number of the stored identification codes may be smaller than a predetermined value, where the predetermined value is estimated according to a capacity of the storage module 204.

The gateway management module 206 is coupled to the microprocessor module 202. The second communication circuit 208 is coupled to the microprocessor module 202 and the gateway management module 206.

In the exemplary embodiment, the second communication circuit 208 receives the identification code and the device control command through the first communication circuit 604, and transmits the identification code and the device control command to the gateway management module 206, where the first communication circuit 604 transmits the identification code and the device control command to the gateway management module 206 according to the PTZ communication protocol.

The gateway management module 206 instructs a current control state of the home control gateway 20 as a turn-on mode, a turn-off mode or other mode. For example, when the control state of the home control gateway 20 is the turn-on mode, it represents that the home control gateway 20 allows the remote control on the home devices. For example, when the control state of the home control gateway 20 is the turn-off mode, it represents that the home control gateway 20 does not allow the remote control on the home devices. The mode patterns included in the control state are not limited by the invention. For example, the device control command corresponds to the turning-on/off of the lighting device 104. For example, the device control command corresponds to the turning-on/off of the air conditioner 108. For example, the device control command corresponds to temperature adjustment of the air conditioner 108. For example, the device control command corresponds to the turning-on/off of the video-audio entertainment device 112. The invention does not limit the operation of the home control function corresponding to the home device and the device control command. For example, the function of the gateway management module 206 is implemented by program codes and the program codes are stored in the storage module 204. Moreover, when the home control gateway 20 is powered on, the microprocessor module 202 executes the program codes to execute the function of the gateway management module 206.

Moreover, when the gateway management module 206 determines that the identification code is the same with one of the one or plurality of identification codes pre-stored in the storage module 204, the gateway management module 206 identifies that the connection request received from the mobile communication device 40 through the LAN 30 is allowed, and the gateway management module 206 activates the home control function corresponding to the at least one home device corresponding to the device control command.

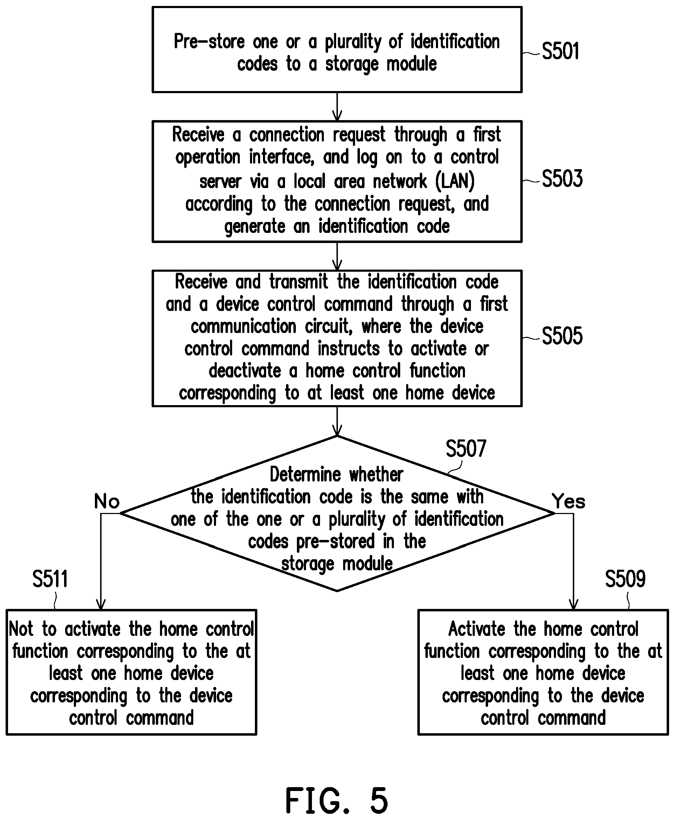

FIG. 5 is a flowchart illustrating a home device control method according to an exemplary embodiment of the invention.

Referring to FIG. 5, in a step S501, the user pre-stores one or a plurality of identification codes to the storage module 204 in a manual input manner. For example, the user may pre-store the identification codes to the storage module 204 through the second operation interface of the home control gateway 20 in the manual input manner, where the number of the identification codes is smaller than a predetermined value.

In a step S503, the mobile communication device 40 receives a connection request through the first operation interface 402, and logs on to the control server 602 via the LAN 30 according to the connection request, and generates an identification code, where the first operation interface 402 is accessed by a browser or accessed by a mobile device application.

In a step S505, the second communication circuit 208 receives and transmits the identification code and a device control command to the gateway management module 206 through the first communication circuit 604, where the device control command instructs to activate or deactivate a home control function corresponding to at least one home device, where the identification code is correspondingly generated according to a user name and a password used for logging on to the control server 602 via the LAN 30 according to the connection request.

In a step S507, the gateway management module 206 determines whether the identification code is the same with one of the one or plurality of identification codes pre-stored in the storage module 204.

In a step S509, if the gateway management module 206 determines that the identification code is the same with one of the one or plurality of identification codes pre-stored in the storage module 204, the gateway management module 206 activates the home control function corresponding to the at least one home device corresponding to the device control command.

In step S511, if the gateway management module 206 determines that the identification code is not the same with one of the one or plurality of identification codes pre-stored in the storage module 204, the gateway management module 206 does not activate the home control function corresponding to the at least one home device corresponding to the device control command.

Referring to FIG. 4 and FIG. 5, in an exemplary embodiment, it is assumed that the user returns home and wants to use the mobile communication device 40 to open a door through the first operation interface 402, first, the user inputs the user name and password through the first operation interface 402 to receive the connection request, and the mobile communication device 40 logs on to the control server 602 via the LAN 30 according to the connection request, and the control server 602 generates the identification code. Moreover, the user may further input the device control command through the first cooperation interface 402, where the device control command instructs to open a door lock of the door. The control server 602 transmits the identification code and the device control command complied with a transmission format of the PTZ communication protocol to the home control gateway 20 through the first communication circuit 604. Particularly, the home control gateway 20 determines whether the identification code is the same with one of the pre-stored identification codes. When it is determined that the identification code is the same with one of the pre-stored identification codes, the home control gateway 20 determines that the connection request is allowed, and opens the door lock of the door according to the device control command. In this way, the door is opened, and the user may get into the house successfully.

In summary, the home device control system and the home device control method of the invention are to transmit the identification code and the device control command complied with the transmission format of the PTZ communication protocol to the home control gateway 20 through the existing DVR device, so as to remotely control the home control function corresponding to the home device according to the device control command. In this way, the user may remotely control the home devices through the mobile communication device in a simple, easy, convenient and safe manner.

## Claims

1. A home device control system (10), comprising:
a monitoring device (60), comprising a control server (602) and a first communication circuit (604);
at least one mobile communication device (40), providing a first operation interface (402) for receiving a connection request, wherein the mobile communication device (40) logs on to the control server (602) via a local area network (30) according to the connection request, and generates an identification code; and
a home control gateway (20), comprising:
a microprocessor module (202);
a storage module (204), coupled to the microprocessor module (202), and pre-storing one or a plurality of identification codes;
a gateway management module (206), coupled to the microprocessor module (202); and
a second communication circuit (208), coupled to the microprocessor module (202) and the gateway management module (206),
wherein the second communication circuit (208) receives the identification code and a device control command through the first communication circuit (604) and transmits the identification code and the device control command to the gateway management module (206), wherein the device control command instructs to activate or deactivate a home control function corresponding to at least one home device,
wherein when the gateway management module (206) determines that the identification code is the same with one of the one or a plurality of identification codes pre-stored in the storage module (204), the gateway management module (206) activates the home control function corresponding to the at least one home device corresponding to the device control command.

2. The home device control system (10) as claimed in claim 1, wherein the monitoring device (60) is a digital video recorder.

3. The home device control system (10) as claimed in claim 1, wherein the identification code and the device control command are complied with a transmission format of a PTZ communication protocol, and the first communication circuit (604) transmits the identification code and the device control command to the gateway management module (206) according to the PTZ communication protocol.

4. The home device control system (10) as claimed in claim 1, wherein the identification code is correspondingly generated according to a user name and a password used for logging on to the control server (602) via the local area network (30).

5. The home device control system (10) as claimed in claim 1, wherein the identification codes are pre-stored to the storage module (204) in a manual input manner.

6. The home device control system (10) as claimed in claim 1, wherein the number of the identification codes is smaller than a predetermined value.

7. The home device control system (10) as claimed in claim 1, wherein the first operation interface (402) is accessed by a browser or accessed by a mobile device application.

8. The home device control system (10) as claimed in claim 1, wherein the local area network (30) is a wired local area network or a wireless local area network.

9. A home device control method, comprising:
pre-storing one or a plurality of identification codes;
receiving a connection request, logging on to a control server (602) of a monitoring device (60) via a local area network (30) according to the connection request, and generating an identification code;
receiving and transmitting the identification code and a device control command, wherein the device control command instructs to activate or deactivate a home control function corresponding to at least one home device; and
activating the home control function corresponding to the at least one home device corresponding to the device control command when determining that the identification code is the same with one of the pre-stored one or a plurality of pre-stored identification codes.

10. The home device control method as claimed in claim 9, wherein the monitoring device (60) is a digital video recorder.

11. The home device control method as claimed in claim 9, wherein the step of receiving and transmitting the identification code and the device control command, wherein the device control command instructs to activate or deactivate the home control function corresponding to the at least one home device comprises:
transmitting the identification code and the device control command complied with a transmission format of a PTZ communication protocol according to the PTZ communication protocol.

12. The home device control method as claimed in claim 9, wherein the step of receiving the connection request, logging on to the control server (602) of the monitoring device (60) via the local area network (30) according to the connection request, and generating the identification code comprises:
correspondingly generating the identification code according to a user name and a password used for logging on to the control server (602) via the local area network (30).

13. The home device control method as claimed in claim 9, wherein the step of pre-storing the identification codes comprises:
pre-storing the identification codes in a manual input manner.

14. The home device control method as claimed in claim 9, wherein the number of the identification codes is smaller than a predetermined value.

15. The home device control method as claimed in claim 9, wherein the step of receiving the connection request, logging on to the control server (602) of the monitoring device (60) via the local area network (30) according to the connection request, and generating the identification code comprises:
using a browser to access or a mobile device application to receive the connection request, logging on to the control server (602) of the monitoring device (60) via the local area network (30) according to the connection request, and generating the identification code.

16. The home device control method as claimed in claim 9, wherein the local area network (30) is a wired local area network or a wireless local area network.
